# EUROPEAN PATENT SPECIFICATION

(11) **EP 2 174 808 B1**
(45) Date of publication and mention of the grant of the patent: **10.08.2011**
(21) Application number: 09171472.5
(22) Date of filing: 28.09.2009
(51) Int. Cl.: B60H 1/00, B62D 29/00

(54) **Method of making a sealed duct from a cab post**
Verfahren zur Herstellung einer versiegelten Leitung aus einer Fahrerhausstange
Procédé de fabrication d'un conduit hermétique à partir d'un poteau mobile

(30) Priority: 09.10.2008 US 248524
(43) Date of publication of application: 14.04.2010
(73) Proprietor: DEERE & COMPANY, Moline, Illinois 61265-8098 (US)
(72) Inventor: Bruss, Paul T, Cedar Falls, IA 50613 (US); Koch, Terry S, Cedar Falls, IA 50613 (US); Wood, Robert L, Independence, IA 67301 (US)
(74) Representative: Dehnhardt, Florian Christopher

(56) References cited:
- JP-A- 62 099 206
- US-A1- 2004 239 148
- US-A1- 2005 082 872

## Description

The present invention relates to a method of making a sealed duct from a cab post.

Utility vehicles such as tractors have cabs which include heating-ventilation-air conditioning (HVAC) units in the cab roof. It is well known that roof HVAC systems do not condition the air at the floor very well unless a duct is included that runs down to the floor. Such ducts can interfere with visibility from the inside of the cab.

Most utility vehicles have a roll-over protection system (ROPS) formed from hollow tubing. In some utility vehicles such hollow ROPS tubes have been used as air ducts, this has been done with very heavy tubes and welded plates on the bottom to force the air out of a hole where a vent louver is placed. This has the disadvantage of high cost and problems with holding paint when using an e-coat system.

JP 62 099 206 discloses the use of a hollow post as an air duct by inserting a pipe of thermoplastic resin, then expanding the resin when drying the enclosed duct in a paint drying furnace.

Accordingly, an object of this invention is to provide a method of making a sealed duct from a cab post.

This and other objects are achieved by the present invention, wherein a hollow cab post has open ends and a vent opening in a side surface. A piece of unexpanded foam is assembled to a clip. The clip is inserted through the vent opening so that the unexpanded foam is held inside the post to one side of the vent opening. The cab frame, including the post assembly, may be dunked in an e-coat tank, after which the paint drains out of the post and around the unexpanded foam. This assembly is then heated, such as in a e-coat oven. The foam expands until it sealingly engages the inner walls of the post. This seals one end of the post and forces conditioned air to flow out of the post, through the vent opening and into the interior of the cab.

For a complete understanding of the objects, techniques, and structure of the invention reference should be made to the following detailed description and accompanying drawings:
- Fig. 1: is a perspective view of a vehicle post assembly,
- Fig. 2: is a perspective view of a clip member of the present invention,
- Fig. 3: is a perspective view of a seal insert assembly of the present invention,
- Fig. 4: is an enlarged perspective view of the seal insert assembly mounted in a cab post,
- Fig. 5: is an exterior perspective view of the seal insert assembly mounted in a cab post, and
- Fig. 6: is an enlarged perspective view of the seal insert assembly mounted in a cab post with an expanded foam piece.

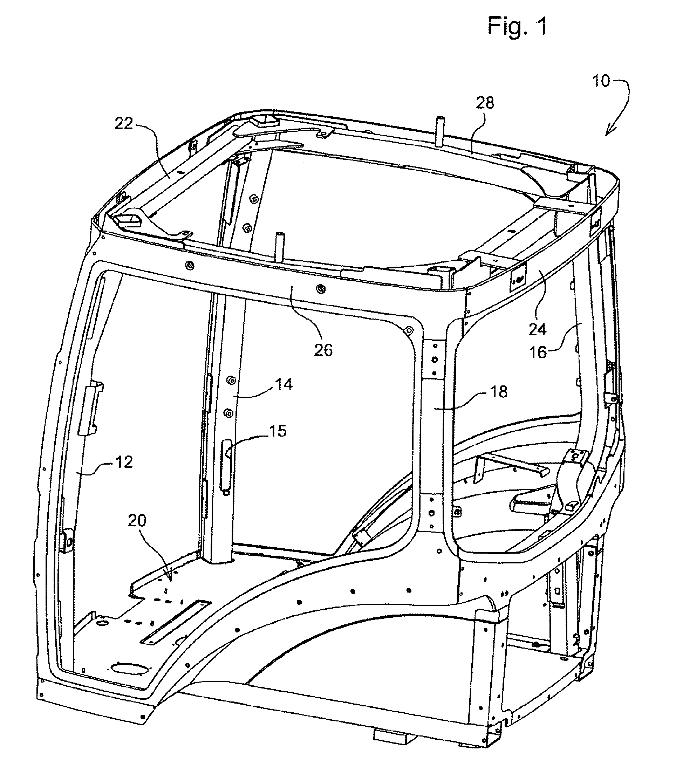

Referring to Fig. 1, a vehicle cab frame 10 includes corner posts 12, 14, 16, and 18 fixed, such as by welding, to a base 20 and to an upper front member 22, an upper rear member 24, an upper left side member 26, and an upper right side member 28. These members 22, 24, 26, and 28 are hollow and are preferably strong enough to function as roll-over-protection (ROPS). The posts, such as post 14, include an aperture or air vent 15 in an inwardly facing side wall thereof. Initially, both the upper and lower ends of the posts 14 are open. The upper end will remain open so it can receive conditioned air from a roof mounted HVAC system (not shown).

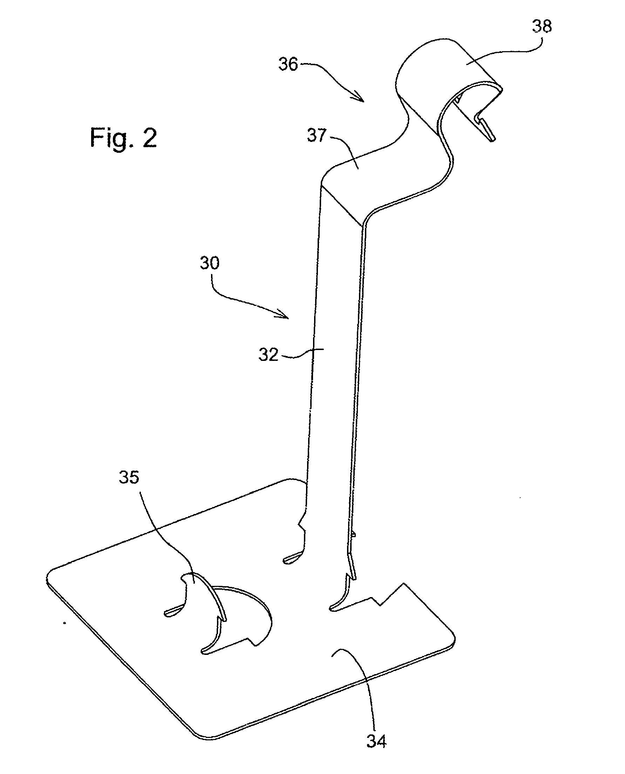

Referring now to Fig. 2, a clip member 30 includes an arm 32 which extends between a flat horizontal rectangular base 34 and an upper part 36. A tab 35 projects upwardly from the base 34. Upper part 36 includes a horizontal arm 37 and a gripping part 38 which is bent to form a downwardly opening slot.

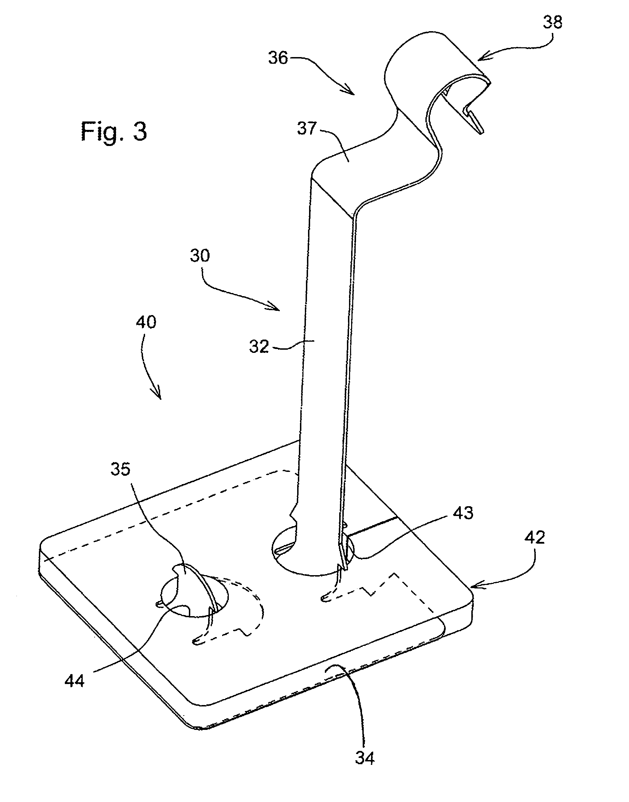

Referring now to Fig. 3, a seal insert assembly 40 includes the clip member 30 and a rectangular piece 42 of unexpanded foam mounted on the base 34. Preferably, the foam is conventional foam such as has been used for many years in the auto industry to prevent road noise from getting into passenger compartments. Foam piece 42 includes a pair of apertures 43 and 44. Aperture 43 receives a lower part of arm 32. Tab 35 projects through aperture 44.

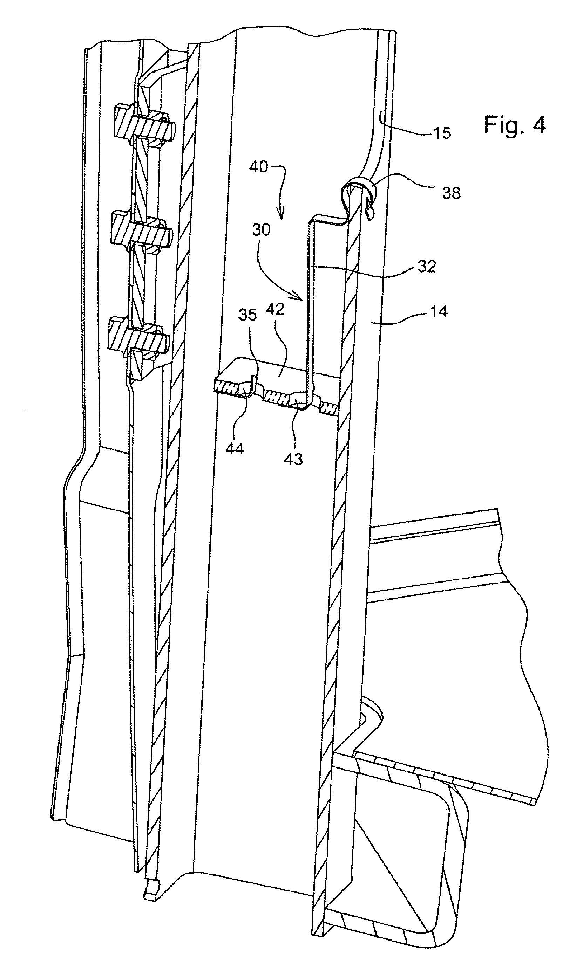

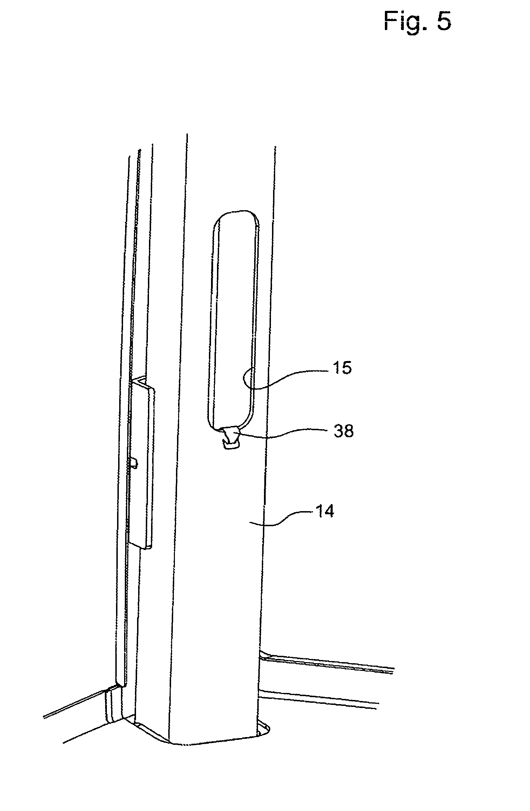

As best seen in Figs. 4 and 5, the seal insert assembly 40 is inserted through vent 15 and into the interior of the post 14 so that the unexpanded foam piece 42 is held inside the post 14 spaced apart and below or to one side of the vent 15, and so that gripping part 38 grips and hangs on a lower edge of the vent 15.

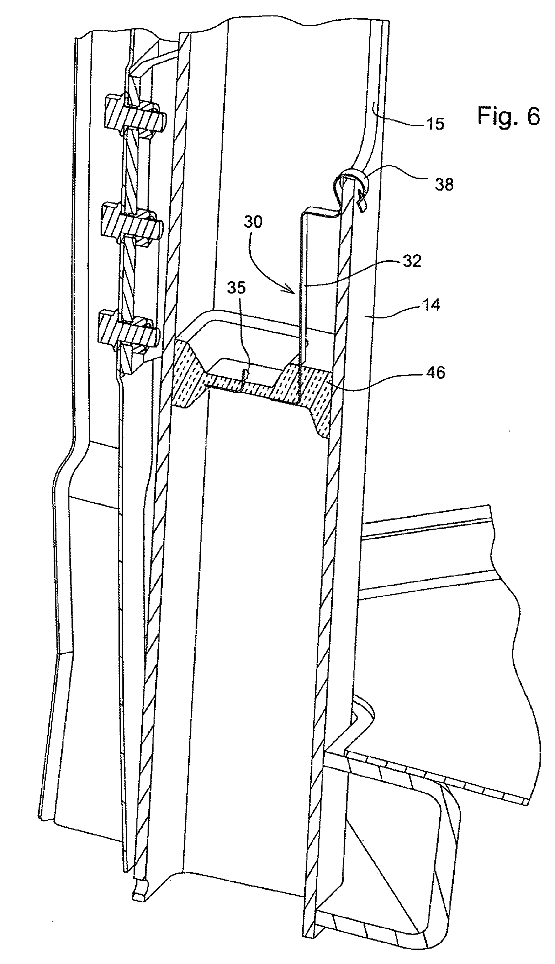

The entire cab frame 10, including the post assembly as shown in Figs. 4 and 5, may then be dunked in a paint or e-coat tank (not shown), after which paint drains out of the post 14 and around the unexpanded foam piece 42. The entire cab frame 10 is then heated, such as in a paint or e-coat oven (not shown). The foam piece 42 expands until the expanded foam 46 sealingly engages the inner walls of the post 14, as best seen in Fig. 6. This seals the lower end of the post 14 and forces conditioned air to flow out of the post 14, through the vent 15 and into the interior of the cab.

This method is reasonably simple. Yet, it eliminates the need for welding, avoids paint problems, and avoids the difficulty of trying to install already expanded foam into a tube in a manner which guarantees it won't fall out, completely plugs the tube.

While the present invention has been described in conjunction with a specific embodiment, it is understood that many alternatives, modifications and variations will be apparent to those skilled in the art in light of the foregoing description. Accordingly, this invention is intended to embrace all such alternatives, modifications and variations which fall within the scope of the appended claims.

## Claims

1. A method of making a sealed duct from a cab post, said method comprising:
providing a hollow post (14), particularly being part of a vehicle cab frame (10),
having a first end, a second end and an air vent (15) in a sidewall thereof; attaching a piece (42) of unexpanded foam to a clip member (30); inserting the clip member (30) together with the foam piece (42) through the air vent (15) and into the post (14) so that the unexpanded foam piece (42) is inside the post (14) and spaced apart from an edge of the air vent (15) and between the air vent (15) and the first end of the post (14); and heating the post (14) so that the foam piece (42) expands and forms a seal within the post (14) between the air vent (15) and the first end of the post (14).

2. The method according to claim 1, **characterized by** providing the clip member (30) with a base (34), a gripping member (38) and an arm (32) connecting the base (34) to the gripping member (38), the base (34) supporting said piece (42) of unexpanded foam.

3. The method according to claim 2, **characterized by** coupling the gripping member (38) to the post (14) so that the gripping member (38) grips said edge of the air vent (15).

4. The method according to claim 2 or 3, **characterized in that** portions (32, 35) of the clip member (38) are received by a pair of apertures (43, 44) formed in the foam piece (42).

5. The method according to one of claims 2 to 4, **characterized by** bending the gripping part (38) to form a downwardly opening slot.

6. The method according to one of claims 1 to 5, **characterized by** forming an aperture (43, 44) in the piece (42) of unexpanded foam; and inserting a portion (32, 35) of the clip member (38) through said aperture (43, 44).

7. The method according to one of claims 1 to 6, **characterized by** forming a pair of apertures (43, 44) in the piece (42) of unexpanded foam; and inserting portions (32, 35) of the clip member (30) through said apertures (43, 44), wherein each portion (32, 35) of the clip member (30) particularly extends upwardly through one of the apertures (43, 44).

## Patentansprüche

1. Verfahren zur Herstellung eines abgedichteten Kanals aus einem Fahrerhausholm, wobei das Verfahren Folgendes umfasst: Bereitstellen eines hohlem Holms (14), der insbesondere Teil eines Fahrzeugfahrerhausrahmens (10) ist, mit einem ersten Ende, einem zweiten Ende und einer Lüftungsöffnung (15) in einer Seitenwand davon; Befestigen eines Teils (42) aus nicht expandiertem Schaumstoff an einem Klemmglied (30); Einführen des Klemmglieds (30) zusammen mit dem Schaumstoffteil (42) durch die Lüftungsöffnung (15) und in den Holm (14), so dass sich das Teil (42) aus nicht expandiertem Schaumstoff in dem Holm (14) befindet und von einem Rand der Lüftungsöffnung (15) und zwischen der Lüftungsöffnung (15) und dem ersten Ende des Holms (14) beabstandet ist; und Erwärmen des Holms (14), so dass das Schaumstoffteil (42) expandiert und eine Dichtung in dem Holm (14) zwischen der Lüftungsöffnung (15) und dem ersten Ende des Holms (14) bildet.

2. Verfahren nach Anspruch 1, **gekennzeichnet durch** Versehen des Klemmglieds (30) mit einer Basis (34), einem Greifglied (38) und einem Arm (32), der die Basis (34) mit dem Greifglied (38) verbindet, wobei die Basis (34) das Teil (42) aus nicht expandiertem Schaumstoff stützt.

3. Verfahren nach Anspruch 2, **gekennzeichnet durch** Koppeln des Greifglieds (38) an den Holm (14), so dass das Greifglied (38) den Rand der Lüftungsöffnung (15) ergreift.

4. Verfahren nach Anspruch 2 oder 3, **dadurch gekennzeichnet, dass** die Teile (32, 35) des Klemmglieds (30) durch ein Paar Durchlässe (43, 44), die in dem Schaumstoffteil (42) ausgebildet sind, aufgenommen werden.

5. Verfahren nach einem der Ansprüche 2 bis 4, **gekennzeichnet durch** Biegen des Greifteils (38) zur Bildung eines nach unten hin mündenden Schlitzes.

6. Verfahren nach einem der Ansprüche 1 bis 5, **gekennzeichnet durch** Ausbilden eines Durchlasses (43, 44) in dem Teil (42) aus nicht expandiertem Schaumstoff und Einführen eines Teils (32, 35) des Klemmglieds (30) **durch** den Durchlass (43, 44).

7. Verfahren nach einem der Ansprüche 1 bis 6, **gekennzeichnet durch** Ausbilden eines Paars Durchlässe (43, 44) in dem Teil (42) aus nicht expandiertem Schaumstoff und Einführen der Teile (32, 35) des Klemmglieds (30) **durch** die Durchlässe (43, 44), wobei sich jeder Teil (32, 35) des Klemmglieds (30) insbesondere **durch** einen der Durchlässe (43, 44) nach oben erstreckt.

## Revendications

1. Procédé de fabrication d'un conduit hermétique à partir d'un poteau mobile, ledit procédé comprenant : fournir un poteau creux (14), en particulier faisant partie d'une structure de caisse de véhicule (10), ayant une première extrémité, une deuxième extrémité et un évent d'air (15) dans une paroi latérale de celui-ci ; attacher un élément (42) en mousse non expansée à un organe d'enclipsage (30) ; insérer l'organe d'enclipsage (30) avec l'élément en mousse (42) à travers l'évent d'air (15) et dans le poteau (14) de telle sorte que l'élément en mousse non expansée (32) se trouve à l'intérieur du poteau (14) et soit espacé d'un bord de l'évent d'air (15) et entre l'évent d'air (15) et la première extrémité du poteau (14) ; et chauffer le poteau (14) de sorte que l'élément en mousse (42) se dilate et forme un joint hermétique dans le poteau (14) entre l'évent d'air (15) et la première extrémité du poteau (14).

2. Procédé selon la revendication 1, **caractérisé en ce que** l'organe d'enclipsage (30) est pourvu d'une base (34), un organe de préhension (38) et d'un bras (32) reliant la base (34) à l'organe de préhension (38), la base (34) supportant ledit élément (42) en mousse non expansée.

3. Procédé selon la revendication 2, **caractérisé par** l'accouplement de l'organe de préhension (38) au poteau (14) de telle sorte que l'organe de préhension (38) saisisse ledit bord de l'évent d'air (15).

4. Procédé selon la revendication 2 ou 3, **caractérisé en ce que** des portions (32, 35) de l'organe d'enclipsage (30) sont reçues par une paire d'ouvertures (43, 44) formées dans l'élément en mousse (42).

5. Procédé selon l'une quelconque des revendications 2 à 4, **caractérisé par** le pliage de la pièce de préhension (38) pour former une fente s'ouvrant vers le bas.

6. Procédé selon l'une quelconque des revendications 1 à 5, **caractérisé par** la formation d'une ouverture (43, 44) dans l'élément (42) en mousse non expansée ; et l'insertion d'une portion (32, 35) de l'organe d'enclipsage (30) à travers ladite ouverture (43, 44).

7. Procédé selon l'une quelconque des revendications 1 à 6, **caractérisé par** la formation d'une paire d'ouvertures (43, 44) dans l'élément (42) en mousse non expansée ; et l'insertion de portions (32, 35) de l'organe d'enclipsage (30) à travers lesdites ouvertures (43, 44), chaque portion (32, 35) de l'organe d'enclipsage (30) s'étendant en particulier vers le haut à travers l'une des ouvertures (43, 44).
